# EUROPEAN PATENT SPECIFICATION

(11) **EP 2 924 763 B1**
(45) Date of publication and mention of the grant of the patent: **11.11.2020**
(21) Application number: 15161112.6
(22) Date of filing: 26.03.2015
(51) Int. Cl.: H01M 2/18, H01M 2/02, H01M 2/34, H01M 10/04, H01M 2/14, H01M 2/26

(54) **SECONDARY BATTERY**
SEKUNDÄRBATTERIE
BATTERIE SECONDAIRE

(30) Priority: 28.03.2014 KR 20140036787
(43) Date of publication of application: 30.09.2015
(73) Proprietor: Samsung SDI Co., Ltd., Yongin-si, Gyeonggi-do (KR)
(72) Inventor: Lee, Won-Jun, Yongin-si, Gyeonggi-do (KR); Byun, Sang-Won, Yongin-si, Gyeonggi-do (KR); Lee, Hong-Hyeon, Yongin-si, Gyeonggi-do (KR)
(74) Representative: Gulde & Partner

(56) References cited:
- EP-A1- 2 309 569
- EP-A1- 2 328 204
- EP-A1- 2 587 567
- EP-A2- 2 426 752
- JP-A- 2012 248 462
- US-A1- 2006 024 568
- US-A1- 2013 209 859

## Description

### BACKGROUND

### 1. Field

The present invention relates to a secondary battery, and, more particularly, to a secondary battery which is capable of preventing its performance from being degraded.

### 2. Description of the Related Art

A secondary battery is a battery that is repeatedly charged or discharged, unlike a primary battery. Secondary batteries are disclosed in US 2013/209859 A1, EP 2 328 204 A1, EP 2 309 569 A1, US 2006/024568 A1, JP 2012 248462 A, EP 2 587 567 A1 and EP 2 426 752 A2. A low-capacity secondary battery may be used for a portable and small electronic device, such as a mobile phone, a notebook computer or a camcorder, whereas a high-capacity secondary battery may be used as a power source for driving a motor of a hybrid vehicle or the like.

Recently, a high-output secondary battery with high-energy density using a non-aqueous electrolyte is being developed. The high-output secondary battery is made by connecting a plurality of secondary batteries in series, and is used in driving a motor of a device requiring high power, for example, an electric vehicle.

The secondary battery includes an electrode assembly, a case, a cap plate, and an electrode terminal. The electrode assembly has a separator, and an anode and a cathode provided on opposite sides of the separator. The case accommodates the electrode assembly therein. The cap plate closes an opening of the case. The electrode terminal is installed to pass through the cap plate and thus is electrically connected to the electrode assembly.

When the discharging or overcharging of a high current occurs in the secondary battery, an electrically weak portion on a line connecting the electrode assembly with the electrode terminal may be melted and cut. In order to effectively cut the line, the secondary battery has a fuse portion therein.

### SUMMARY

Accordingly, the present invention has been made keeping in mind the above problems occurring in the related art, and the present invention provides a secondary battery according to claim 1, in which a predetermined portion of a plate-shaped bottom retainer disposed on a bottom of a case is removed, thus preventing an electrolyte from being collected between the bottom of the case and the bottom retainer.

Another aspect of the present invention is to provide a secondary battery, in which a bottom retainer is formed on a bottom of a case to which arc debris coming from a fuse portion in the event of an external short-circuit drops, thus preventing the case from being melted.

According to an embodiment of the present invention, there is provided a secondary battery, including an electrode assembly including a first electrode, a second electrode, and a separator interposed between the first and second electrodes; a first lead tab electrically connected to the first electrode; a second lead tab electrically connected to the second electrode; a case configured to accommodate the electrode assembly, the first lead tab and the second lead tab therein, with an opening formed in a top of the case; a cap plate configured to close the opening of the case; and a bottom retainer disposed on a bottom in the case. The bottom retainer may include a non-contact portion that is not in contact with the bottom of the case.

The bottom retainer may include a plate-shaped body portion, and the non-contact portion may be formed at a predetermined position of the body portion in a longitudinal direction thereof.

Further, the non-contact portion of the bottom retainer may have a shape of a groove, the groove may be formed by eliminating each of opposite sides of a middle region of the body portion in the longitudinal direction thereof.

The non-contact portion of the bottom retainer may include first and second grooves spaced apart from each other by a predetermined distance, each of the first and second grooves may be formed by eliminating each of opposite sides of a middle region of the body portion in the longitudinal direction thereof.

The first electrode may be a cathode, and the second electrode may be an anode.

The first or second lead tab may include a fuse portion, the bottom retainer may be formed on the bottom of the case corresponding to the fuse portion.

The fuse portion may be formed around the anode.

The bottom retainer may be formed as an insulation member.

An electrolyte may be positioned between the bottom retainer and the bottom of the case.

The bottom retainer may comprise at least two non-contact portions that are not in contact with the bottom of the case.

As is apparent from the above description, the present invention is advantageous in that it is possible to prevent the electrolyte from being collected between the bottom of the case and the bottom retainer, thus allowing the electrode assembly to smoothly absorb the electrolyte and thereby preventing the performance of the secondary battery from being degraded.

Further, the present invention is advantageous in that the bottom retainer is provided on the bottom of the case corresponding to the position where the arc debris is dropped, thus preventing the case from being melted and thereby suppressing the damage to the bottom of the case.

### BRIEF DESCRIPTION OF THE DRAWINGS

Example embodiments will now be described more fully hereinafter with reference to the accompanying drawings.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view showing a secondary battery according to the present invention;
FIG. 2 is a sectional view taken along line A-A' of FIG. 1;
FIG. 3 is a perspective view showing a bottom retainer according to an embodiment of the present invention;
FIG. 4 is a perspective view showing the bottom retainer positioned in a case of FIG. 1;
FIG. 5 is a perspective view showing a position where arc debris is produced in the event of an external short-circuit and a position of the bottom retainer; and
FIG. 6 is a perspective view showing a bottom retainer according to another embodiment of the present invention.

### DETAILED DESCRIPTION

The invention will be described more fully hereinafter with reference to the accompanying drawings, in which example embodiments of the inventions are shown. While a preferred embodiment of the invention has been described using specific terms, such description is for illustrative purposes only.

In the following description, if it is decided that the detailed description of known function or configuration related to the invention makes the subject matter of the invention unclear, the detailed description is omitted. Further, like reference numerals are used to identify like elements throughout different drawings. For clarity and convenience of description, the size or shape of elements shown in the drawings may not be illustrated to scale.

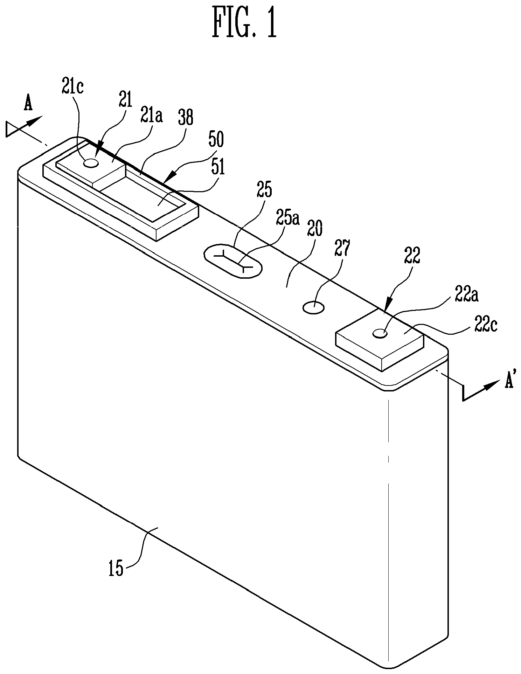

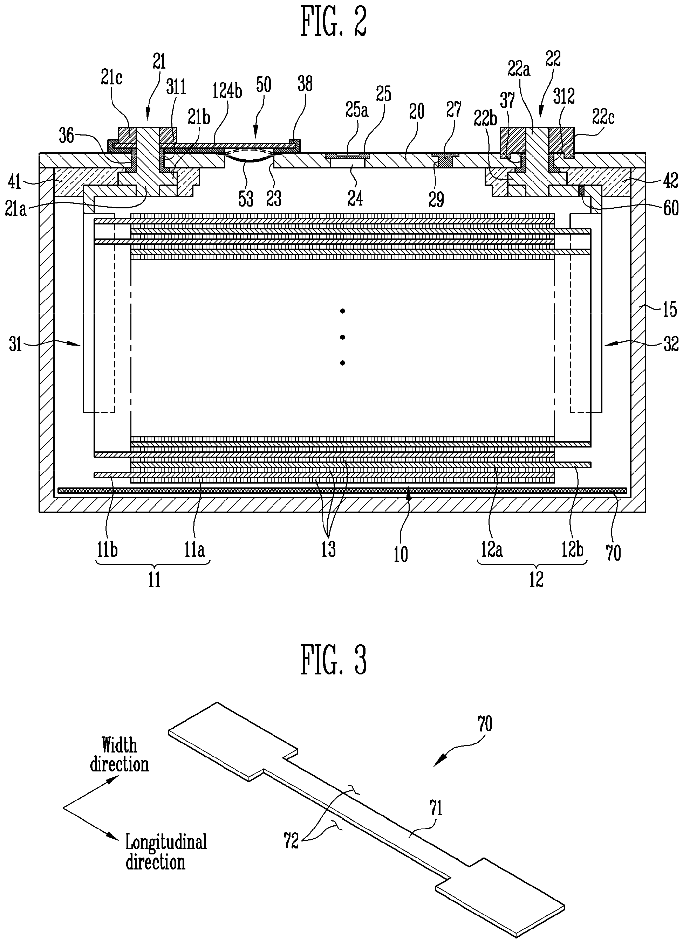

FIG. 1 is a perspective view showing a secondary battery according to the present invention, and FIG. 2 is a sectional view taken along line A-A' of FIG. 1. Further, FIG. 3 is a perspective view showing a bottom retainer according to an embodiment of the present invention.

Referring to FIGS. 1, 2 and 3, the secondary battery according to the present invention includes an electrode assembly 10, a first lead tab 31, a second lead tab 32, a case 15 which accommodates the electrode assembly 10, the first lead tab 31 and the second lead tab 32 and has an opening on a top thereof, and a cap plate 20 which closes the opening of the case 15. Further, the secondary battery includes a first electrode terminal 21 (hereinafter referred to as a "cathode terminal") and a second electrode terminal 22 (hereinafter referred to as an "anode terminal") which are provided on the cap plate 20, an external short-circuit portion 50 which is provided around the cathode terminal 21, and a fuse portion 60 which is provided around the anode terminal 22.

Further, a plate-shaped bottom retainer 70 is provided on a bottom in the case 15. Here, the bottom retainer 70 is provided with non-contact portions 72 that are not in contact with the bottom of the case 15.

Moreover, the bottom retainer 70 includes a plate-shaped body portion 71. Each non-contact portion 72 may be formed on a region in a longitudinal direction of the body portion 71. That is, the non-contact portion 72 of the bottom retainer 70 may have the shape of a groove that is formed by eliminating each of opposite sides of a middle region of the body portion 71 in the longitudinal direction thereof.

The electrode assembly 10 according to the present invention intended to charge or discharge an electric current includes a separator 13 that is an insulator, and a first electrode 11 (hereinafter referred to as a "cathode") and a second electrode 12 (hereinafter referred to as an "anode") provided on opposite sides of the separator 13. The electrode assembly 10 is formed by placing the first and second electrodes 11 and 12 on the opposite sides of the separator 13 and then winding the cathode 11, the separator 13 and the anode 12 in a jelly-roll form. Each of the cathode 11 and the anode 12 includes a coating portion 11a, 12a and a non-coating portion 11b, 12b. The coating portion is formed by applying an active material to a current collector of a metal plate. The non-coating portion is an exposed portion of the current collector because no active material is applied thereto.

The non-coating portion 11b of the cathode 11 is formed on one end of the cathode 11 along the wound cathode 11. The non-coating portion 12b of the anode 12 is formed on one end of the anode 12 along the wound anode 12. The non-coating portions 11b and 12b are disposed on opposite ends of the electrode assembly 10, respectively.

For example, the case 15 has the shape of a rectangular parallelepiped to define a space for accommodating the electrode assembly 10 and an electrolyte therein. An opening connecting an outside with an internal space of the battery is formed in a surface of the rectangular parallelepiped. The opening allows the electrode assembly 10 to be inserted into the case 15.

The cap plate 20 is made of a thin steel sheet and then mounted to the opening of the case 15, thus closing the case 15. The cap plate 20 further includes an electrolyte inlet port 29 and a vent hole 24. After the cap plate 20 is coupled to the case 15, the electrolyte inlet port 29 allows the electrolyte to be injected into the case 15. After the electrolyte has been injected, the electrolyte inlet port 29 is sealed by a sealing stopper 27.

The vent hole 24 for discharging an internal pressure of the secondary battery is closed by a vent plate 25. If the internal pressure of the secondary battery reaches a preset level, the vent plate 25 is cut, thus opening the vent hole 24. The vent plate 25 has a notch 25a to induce the cutting.

The cathode terminal 21 and the anode terminal 22 are installed to pass through the cap plate 20 and are electrically connected to the electrode assembly 10. That is, the cathode terminal 21 is electrically connected to the cathode 11 of the electrode assembly 10, while the anode terminal 22 is electrically connected to the anode 12 of the electrode assembly 10. Thus, polarities of the electrode assembly 10 are revealed to the outside of the case 15, via the cathode terminal 21 and the anode terminal 22.

Since the cathode terminal 21 and the anode terminal 22 inside the cap plate 20 have the same structure, only one of the cathode and anode terminals 21 and 22 will be described. Meanwhile, since the cathode terminal 21 and the anode terminal 22 outside the cap plate 20 have different structures, the cathode and anode terminals 21 and 22 will be separately described.

The cathode, anode terminal 21, 22 includes a rivet terminal 21a, 22a, a flange 21b, 22b, and a terminal plate 21c, 22c. The rivet terminal 21a, 22a is installed in the terminal hole 311, 312 of the cap plate 20. The flange 21b, 22b is integrally provided inside the cap plate 20, and extends widely in such a way as to be integrated with the rivet terminal 21a, 22a. The terminal plate 21c, 22c is disposed outside the cap plate 20 to be connected to the rivet terminal 21a, 22a by riveting or welding.

A cathode, anode gasket 36, 37 is provided between the rivet terminal 21a, 22a of the cathode, anode terminal 21, 22 and an inner surface of the terminal hole 311, 312 of the cap plate 20, thus sealing a gap between the rivet terminal 21a, 22a of the cathode, anode terminal 21, 22 and the cap plate 20. The cathode, anode gasket 36, 37 extends further between the flange 21b, 22b and the inner surface of the cap plate 20, thus further sealing a gap between the flange 21b, 22b and the cap plate 20. That is, the cathode, anode gasket 36, 37 is provided around the cathode, anode terminal 21, 22 on the cap plate 20, thus preventing the electrolyte from leaking out through the terminal hole 311, 312.

A plurality of electrode assemblies 10 may be provided (see FIG. 2). Thus, respective cathodes 11 of the electrode assemblies 10 are electrically connected to each other via the cathode lead tab 31, and anodes 12 thereof are electrically connected to each other via the anode lead tab 32. Although not shown in the drawings, the present invention may also be applied to the secondary battery having one electrode assembly.

The cathode, anode lead tab 31, 32 electrically connects the cathode, anode terminal 21, 22 to the cathode, anode 11, 12 of the electrode assembly 10. That is, the cathode, anode lead tab 31, 32 is coupled to a lower end of the rivet terminal 21a, 22a, and caulking is performed on the lower end, so that the cathode, anode lead tab 31, 32 is connected to the lower end of the rivet terminal 21a, 22a while being supported by the flange 21b, 22b.

A cathode, anode insulation member 41, 42 is provided between the cathode, anode lead tab 31, 32 and the cap plate 20, thus electrically insulating the cathode, anode lead tab 31, 32 from the cap plate 20. Further, the cathode, anode insulation member 41, 42 is coupled at one side thereof to the cap plate 20, and surrounds at the other side thereof the cathode, anode lead tab 31, 32, the rivet terminal 21a, 22a and the flange 21b, 22b, thus stabilizing a connecting structure.

The external short-circuit portion 50 pertaining to the terminal plate 21c will be described. Referring to FIG. 2, the external short-circuit portion 50 includes a short-circuit tab 51 and a short-circuit member 53 which are spaced apart from each other or cause a short circuit depending on an internal pressure.

The short-circuit tab 51 is electrically connected to the rivet terminal 21a of the cathode terminal 21, and is disposed outside the cap plate 20 with the insulation member 38 interposed between the short-circuit tab 51 and the cap plate 20. The insulation member 38 is provided between the short-circuit tab 51 and the cap plate 20, thus electrically insulating the short-circuit tab 51 from the cap plate 20. That is, the cap plate 20 is electrically insulated from the cathode terminal 21.

The short-circuit tab 51 and the terminal plate 21c are placed on an upper end of the rivet terminal 21a and caulking is performed on the upper end. In this way, the short-circuit tab 51 and the terminal plate 21c are coupled to the upper end of the rivet terminal 21a. Thus, the short-circuit tab 51 and the terminal plate 21c are secured and supported on the cap plate 20 with the insulation member 38 interposed between the short-circuit tab 51, the terminal plate 21c and the cap plate 20.

The short-circuit member 53 is installed in a short-circuit hole 23 of the cap plate 20. The short-circuit tab 51 is connected to the cathode terminal 21 and then extends towards the short-circuit member 53. Thus, the short-circuit tab 51 and the short-circuit member 53 face each other in the short-circuit hole 23, thus creating a spaced state (see a solid line) or a short-circuit state (see an imaginary line).

When the internal pressure of the secondary battery rises, the short-circuit member 53 is deformed from the state shown by the solid line of FIG. 2 to the state shown by the imaginary line, thus making contact with the short-circuit tab 51. Thus, the short-circuit tab 51 is electrically connected to the cap plate 20, thus maintaining the short-circuit state of the electrode assembly 10. In the event of the short circuit, a high-voltage current is instantaneously discharged between the cathode and anode terminals 21 and 22 through the short-circuit tab 51 and the short-circuit member 53. Here, the fuse portion 60 may be melted and cut on the discharge line connecting the electrode assembly 10 with the cathode, anode terminal 21, 22.

When the fuse portion 60 is melted and cut as such, arc may be produced at the cut point. In this case, the arc debris drops to the bottom in the case 15, so that the bottom of the case 15 may be melted and damaged. In order to prevent the problems, the bottom retainer 70 is usually provided on the bottom in the case 15. Here, the bottom retainer 70 may be formed to have the same shape as the bottom of the case 15.

However, the bottom retainer 70 provided on the bottom of the case 15 may cause a problem wherein the electrolyte collected between the bottom of the case 15 and the bottom retainer 70 during the injection of the electrolyte when the secondary battery is assembled is not absorbed by the electrode assembly 10.

Thus, the secondary battery according to the present invention may eliminate the opposite sides of the middle region of the bottom retainer 70 in the longitudinal direction thereof, thus allowing the electrolyte collected in the bottom of the case 15 to flow smoothly. The width of the bottom retainer 70 is varied in the longitudinal direction thereof so that a part of the bottom retainer 70 has the width smaller than that of other parts thereof. That is, the bottom retainer 70 includes a plate-shaped body portion 71 and groove-shaped non-contact portions 72 formed by eliminating the opposite sides of the middle region of the body portion 71 in the longitudinal direction thereof. At the part, at which the groove-shaped non-contact portions 72 are formed, the bottom retainer 70 has a smaller width than that of other parts.

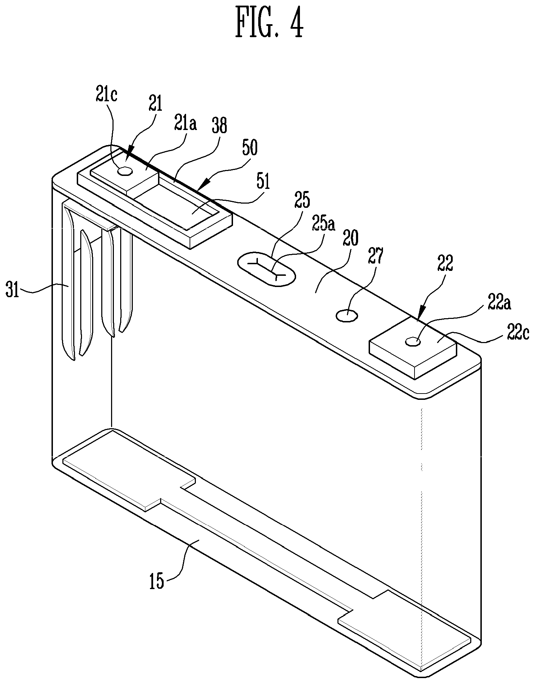

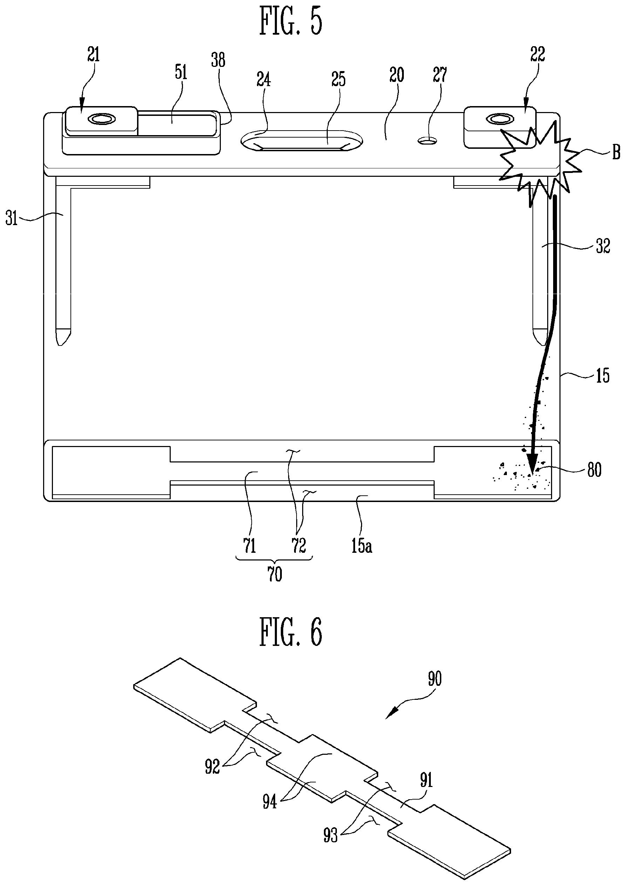

Here, the non-contact portions 72 may be formed on regions of the bottom retainer 70 other than a region where the arc debris caused by the arc produced in the fuse portion 60 is dropped and thereby the case 15 is melted. It means that the bottom retainer 70 has a smaller width on regions of the bottom retainer 70 other than a region where the arc debris caused by the arc produced in the fuse portion 60 is dropped and thereby the case 15 is melted. This will be described in detail with reference to FIGS. 4 and 5.

As such, each non-contact portion 72 of the bottom retainer 70 serves as a passage through which the electrolyte collected in the bottom of the case 15 may flow. Therefore, the electrode assembly 10 can smoothly absorb the electrolyte, thus preventing the performance of the secondary battery from being degraded.

FIG. 4 is a perspective view showing the bottom retainer positioned in the case in FIG. 1, and FIG. 5 is a perspective view showing a position where the arc debris is produced in the event of an external short-circuit and a position of the bottom retainer.

Referring to FIGS. 4 and 5, since the secondary battery is repeatedly charged and discharged, an excessive amount of heat may be generated in the case 15 or the electrolyte may be decomposed. Due to the generation of the heat or the decomposition of the electrolyte, the internal pressure of the secondary battery may rise. Further, an increase in internal pressure may lead to the ignition or bursting of the secondary battery.

Thus, in order to prevent the secondary battery from being ignited or burst due to the increase in internal pressure, the case 15 may be provided with the external short-circuit portion 50 (see FIG. 2). When the internal pressure of the secondary battery increases, the external short-circuit portion 50 causes the short circuit between the cathode and the anode of the electrode assembly 10 (see FIG. 2) outside the secondary battery. If the external short-circuit portion 50 is operated, a high current is discharged, so that the charged degree of the electrode assembly 10 is decreased. Due to the discharge of the high current, a weak point on the discharge line connecting the electrode assembly 10 with the electrode terminal 21, 22 may be melted and cut.

In order to effectively cut the discharge line in the event of the external short-circuit or the overcharge, the secondary battery has the fuse portion 60 on the lead tab 31, 32 connecting the electrode terminal 21, 22 with the electrode assembly 10. However, when the fuse portion 60 is melted and cut and then an interval between cut portions is narrow, the arc B may be produced on the cut portions. As such, the arc B produced in the secondary battery reacts with the electrolyte, thus causing the ignition or bursting and thereby reducing the safety of the secondary battery.

Although the fuse portion 60 may be provided around the cathode terminal 21 or the anode terminal 22, the fuse portion 60 (see FIG. 2) is provided around the anode terminal 22 in the embodiment of the present invention. That is, in order to render the fuse portion 60 to be melted and cut as a high-voltage current is discharged by the operation of the external short-circuit portion 50, the fuse portion 60 is provided on the anode lead tab 32.

Such a fuse portion 60 requires a hole (not shown) at a predetermined position of the anode lead tab 32, it has a smaller sectional area than the anode lead tab 32 having no hole. The fuse portion 60 is melted by heat that is generated when a short circuit occurs in the electrode assembly 10 and then a high current flows into the anode lead tab 32, thus interrupting the flow of a current between each of the case 15 and the cap plate 20 and the electrode assembly 10.

The non-contact portions 72 disposed on the bottom in the case 15 according to the present invention are formed on points other than a point where the case 15 is melted by the arc debris 80 when the arc B is produced. Thereby, it is possible to prevent the bottom of the case 15 from being damaged by the arc debris 80 in the event of the external short-circuit.

That is, the bottom retainer 70 includes a plate-shaped body portion 71 that is in contact with the bottom in the case 15, and a non-contact portion 72 that is provided at a position of the body portion 71 in the longitudinal direction thereof and is not in contact with the bottom of the case 15. The non-contact portion 72 of the bottom retainer 70 may comprise grooves that are formed by eliminating the opposite sides of the middle region of the body portion 71 in the longitudinal direction thereof.

Therefore, both ends of the body portion 71 of the bottom retainer 70 come into contact with the bottom of the case 15, and support the electrode assembly 10 positioned in the case 15. Further, each of the non-contact portions 72 formed by eliminating the opposite sides of the middle region of the body portion 71 in the longitudinal direction thereof serves as the passage to permit the flow of the electrolyte.

That is, since the bottom retainer 70 does not completely come into contact with the bottom of the case 15, the electrolyte may be collected therebetween. However, the bottom retainer 70 is provided with the non-contact portions 72, thus preventing the electrolyte from being collected in the bottom of the case 15. Further, the bottom retainer 70 is formed as the insulation member, thus being insulated from the electrode assembly.

FIG. 6 is a perspective view showing a bottom retainer according to another embodiment, which is not part of, but useful for the understanding of the present invention as claimed.

Referring to FIG. 6, the bottom retainer 90 according to another embodiment of the present invention includes non-contact portions 92 and 93 which are not in contact with the bottom of the case 15, similarly to the preceding embodiment of the present invention.

That is, the bottom retainer 90 includes a plate-shaped body portion 91 and the non-contact portions 92 and 93 which are formed at predetermined positions of the body portion 91 in a longitudinal direction thereof. To be more specific, the non-contact portions 92 and 93 of the bottom retainer 90 may be first and second grooves that are formed by eliminating opposite sides of the middle region of the body portion 91 in the longitudinal direction thereof, the first and second grooves being spaced apart from each other by a predetermined distance. At the parts, at which the groove-shaped non-contact portions 92 and 93 are formed, the bottom retainer 70 has smaller width than that of other parts.

In this case, the eliminated regions of the bottom retainer 90, namely, four non-contact portions 92 and 93 allow the electrolyte to smoothly flow. A support portion 94 provided between the non-contact portions 92 and 93 may reinforce the rigidity of the bottom retainer 90. Such a configuration is more advantageous to support the electrode assembly 10.

The non-contact portions 92 and 93 of the bottom retainer 90 according to the present invention prevent the electrolyte from being collected in the bottom of the case 15, thus allowing the electrode assembly 10 to more easily absorb the electrolyte and thereby preventing the performance of the secondary battery from being degraded.

## Claims

1. A secondary battery, comprising:
an electrode assembly (10) including a first electrode (11), a second electrode (12), and a separator (13) interposed between the first and second electrodes (11, 12),;
a first lead tab (31) electrically connected to the first electrode (11);
a second lead tab (32) electrically connected to the second electrode (12);
a case (15) configured to accommodate the electrode assembly (10), the first lead tab (31) and the second lead tab (32) therein, with an opening formed in a top of the case (15);and
a cap plate (20) configured to close the opening of the case (15);
wherein the first electrode (11), the second electrode (12), and the separator (13) are wound together to have a jelly-roll shape; and
**characterized in that**
the secondary battery comprises a plate-shaped bottom retainer (70) disposed on a bottom in the case (15),
wherein the bottom retainer (70) comprises a plate shaped body portion (71) and a groove shaped non-contact portion (72),
wherein the non-contact portion (72) is formed at a middle region of the body portion (71) in a longitudinal direction of the body portion (71), wherein the bottom retainer (70) has a smaller width at the non-contact portion (72) than at other parts of the bottom retainer (70).

2. The secondary battery of claim 1, wherein the non-contact portion (72) of the bottom retainer (70) has the shape of a groove, the groove being formed by eliminating each of opposite sides of the middle region of the body portion (71) in the longitudinal direction thereof.

3. The secondary battery of claim 1 or 2, wherein the non-contact portion (72) of the bottom retainer (70) comprises first and second grooves spaced apart from each other by a predetermined distance, each of the first and second grooves being formed by eliminating each of opposite sides of a middle region of the body portion (71) in the longitudinal direction thereof.

4. The secondary battery of one of the preceding claims, wherein the first electrode (11) comprises a cathode, and the second electrode (12) comprises an anode.

5. The secondary battery of one of the preceding claims, wherein the first lead tab (31) or the second lead tab (32) comprises a fuse portion (60), the bottom retainer (70) being formed on the bottom of the case (15) corresponding to the fuse portion (60).

6. The secondary battery of claim 5, wherein the fuse portion (60) is formed around the anode.

7. The secondary battery of one of the preceding claims wherein the bottom retainer (70) is formed as an insulation member.

8. The secondary battery of one of the preceding claims, wherein an electrolyte is positioned between the bottom retainer (70) and the bottom of the case (15).

9. The secondary battery of one of the preceding claims, wherein the bottom retainer (70) comprises at least two non-contact portions (91, 92) that are not in contact with the bottom of the case (15).

## Patentansprüche

1. Eine Sekundärbatterie, aufweisend:
eine Elektrodenanordnung (10), die eine erste Elektrode (11), eine zweite Elektrode (12) und einen Separator (13), der zwischen die erste und zweite Elektrode (11, 12) eingefügt ist, aufweist;
eine erste Anschlussfahne (31), die mit der ersten Elektrode (11) elektrisch verbunden ist;
eine zweite Anschlussfahne (32), die mit der zweiten Elektrode (12) elektrisch verbunden ist;
ein Gehäuse (15), das konfiguriert ist, um die Elektrodenanordnung (10), die erste Anschlussfahne (31) und die zweite Anschlussfahne (32) darin aufzunehmen, wobei eine Öffnung in einer Oberseite des Gehäuses (15) ausgebildet ist; und
eine Abdeckplatte (20), die konfiguriert ist, um die Öffnung des Gehäuses (15) zu schließen;
wobei die erste Elektrode (11), die zweite Elektrode (12) und der Separator (13) zusammengewickelt sind, um eine gewickelte Form aufzuweisen; und **dadurch gekennzeichnet, dass**
die Sekundärbatterie einen plattenförmigen Bodenhalter (70), der auf einem Boden im Gehäuse (15) angeordnet ist, aufweist,
wobei der Bodenhalter (70) einen plattenförmigen Körperabschnitt (71) und einen nutenförmigen kontaktlosen Abschnitt (72) aufweist,
wobei der kontaktlose Abschnitt (72) in einem mittleren Bereich des Körperabschnitts (71) in einer Längsrichtung des Körperabschnitts (71) ausbildet ist, wobei der Bodenhalter (70) eine kleinere Breite am kontaktlosen Abschnitt (72) als an anderen Teilen des Bodenhalters (70) aufweist.

2. Die Sekundärbatterie nach Anspruch 1, wobei der kontaktlose Abschnitt (72) des Bodenhalters (70) die Form einer Nut aufweist, wobei die Nut durch Entfernen jeder von gegenüberliegenden Seiten des mittleren Bereichs des Körperabschnitts (71) in der Längsrichtung davon ausgebildet wird.

3. Die Sekundärbatterie nach Anspruch 1 oder 2, wobei der kontaktlose Abschnitt (72) des Bodenhalters (70) eine erste und zweite Nut, die in einem vorbestimmten Abstand voneinander beabstandet sind, aufweist, wobei jede der ersten und zweiten Nut durch Entfernen jeder von gegenüberliegenden Seiten eines mittleren Bereichs des Körperabschnitts (71) in der Längsrichtung davon ausgebildet wird.

4. Die Sekundärbatterie nach einem der vorhergehenden Ansprüche, wobei die erste Elektrode (11) eine Kathode aufweist und die zweite Elektrode (12) eine Anode aufweist.

5. Die Sekundärbatterie nach einem der vorhergehenden Ansprüche, wobei die erste Anschlussfahne (31) oder die zweite Anschlussfahne (32) einen Sicherungsabschnitt (60) aufweist, wobei der Bodenhalter (70) auf dem Boden des Gehäuses (15) entsprechend dem Sicherungsabschnitt (60) ausgebildet ist.

6. Die Sekundärbatterie nach Anspruch 5, wobei der Sicherungsabschnitt (60) um die Anode herum ausgebildet ist.

7. Die Sekundärbatterie nach einem der vorhergehenden Ansprüche, wobei der Bodenhalter (70) als Isolierelement ausgebildet ist.

8. Die Sekundärbatterie nach einem der vorhergehenden Ansprüche, wobei ein Elektrolyt zwischen dem Bodenhalter (70) und dem Boden des Gehäuses (15) positioniert ist.

9. Die Sekundärbatterie nach einem der vorhergehenden Ansprüche, wobei der Bodenhalter (70) zumindest zwei kontaktlose Abschnitte (91, 92), die nicht mit dem Boden des Gehäuses (15) in Kontakt stehen, aufweist.

## Revendications

1. Batterie secondaire, comprenant :
un ensemble d'électrodes (10) comportant une première électrode (11), une deuxième électrode (12), et un séparateur (13) interposé entre les première et deuxième électrodes (11, 12) ;
une première languette de connecteur (31) connectée électriquement à la première électrode (11) ;
une deuxième languette de connecteur (32) connectée électriquement à la deuxième électrode (12) ;
un boîtier (15) configuré pour loger, dans celui-ci, l'ensemble d'électrodes (10), la première languette de connecteur (31) et la deuxième languette de connecteur (32), avec une ouverture formée dans le haut du boîtier (15) ; et
une plaque de capuchon (20) configurée pour fermer l'ouverture du boîtier (15) ;
dans laquelle la première électrode (11), la deuxième électrode (12), et le séparateur (13) sont enroulés ensemble pour avoir une forme roulée ; et
la batterie secondaire étant **caractérisée en ce qu'**elle comprend un dispositif de retenue de fond (70) en forme de plaque disposé sur un fond du boîtier (15),
dans laquelle le dispositif de retenue de fond (70) comprend une partie de corps (71) en forme de plaque et une partie sans contact (72) en forme de rainure,
dans laquelle la partie sans contact (72) est formée dans une région médiane de la partie de corps (71) dans une direction longitudinale de la partie de corps (71), où le dispositif de retenue de fond (70) a une largeur plus petite au niveau de la partie sans contact (72) qu'au niveau des autres porties du dispositif de retenue de fond (70).

2. Batterie secondaire de la revendication 1, dans laquelle la partie sans contact (72) du dispositif de retenue de fond (70) a la forme d'une rainure, la rainure étant formée en éliminant chacun des côtés opposés de la région médiane de la partie de corps (71) dans la direction longitudinale de celle-ci.

3. Batterie secondaire de la revendication 1 ou 2, dans laquelle la partie sans contact (72) du dispositif de retenue de fond (70) comprend des première et deuxième rainures espacées l'une de l'autre d'une distance prédéterminée, chacune des première et deuxième rainures étant formée en éliminant chacun des côtés opposés d'une région médiane de la partie de corps (71) dans la direction longitudinale de celle-ci.

4. Batterie secondaire de l'une des revendications précédentes, dans laquelle la première électrode (11) consiste en une cathode, et la deuxième électrode (12) consiste en une anode.

5. Batterie secondaire de l'une des revendications précédentes, dans laquelle la première languette de connecteur (31) ou la deuxième languette de connecteur (32) comprend une partie de fusible (60), le dispositif de retenue de fond (70) étant formé sur le fond du boîtier (15) correspondant à la partie de fusible (60).

6. Batterie secondaire de la revendication 5, dans laquelle la partie de fusible (60) est formée autour de l'anode.

7. Batterie secondaire de l'une des revendications précédentes, dans laquelle le dispositif de retenue de fond (70) est formé comme un élément d'isolation.

8. Batterie secondaire de l'une des revendications précédentes, dans laquelle un électrolyte est positionné entre le dispositif de retenue de fond (70) et le fond du boîtier (15).

9. Batterie secondaire de l'une des revendications précédentes, dans laquelle le dispositif de retenue de fond (70) comprend au moins deux parties sans contact (91, 92) qui ne sont pas en contact avec le fond du boîtier (15).
